(19) **Europäisches Patentamt**
**European Patent Office**
**Office européen des brevets**

(11) **EP 2 847 560 B1**

(12) **EUROPÄISCHE PATENTSCHRIFT**

(45) Veröffentlichungstag und Bekanntmachung des Hinweises auf die Patenterteilung:
**01.07.2020 Patentblatt 2020/27**

(21) Anmeldenummer: **13727043.5**

(22) Anmeldetag: **10.05.2013**

(51) Int Cl.:
*G01J 5/10* *(2006.01)*       *G01J 5/00* *(2006.01)*
*G01K 17/00* *(2006.01)*      *G06F 30/13* *(2020.01)*
*G06F 119/08* *(2020.01)*

(86) Internationale Anmeldenummer:
**PCT/EP2013/001385**

(87) Internationale Veröffentlichungsnummer:
**WO 2013/167278 (14.11.2013 Gazette 2013/46)**

(54) **VERFAHREN ZUM MESSEN UND BERECHNEN EINES WÄRMETRANSPORTS**

METHOD FOR MEASURING AND CALCULATING A HEAT FLUX

PROCEDE DE MESURE ET DE CALCULE D'UN FLUX DE CHALEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.05.2012 DE 102012009080**

(43) Veröffentlichungstag der Anmeldung:
**18.03.2015 Patentblatt 2015/12**

(73) Patentinhaber: **Mischke, Gerald**
**71384 Weinstadt-Endersbach (DE)**

(72) Erfinder: **Mischke, Gerald**
**71384 Weinstadt-Endersbach (DE)**

(74) Vertreter: **Raible Deissler Lehmann Patentanwälte PartG mbB**
**Senefelderstrasse 26**
**70176 Stuttgart (DE)**

(56) Entgegenhaltungen:
**JP-A- 2000 206 268      US-A1- 2003 160 757**
**US-B1- 6 422 743**

• **REVEL G M ET AL: "Paper;Development and experimental evaluation of a thermography measurement system for real-time monitoring of comfort and heat rate exchange in the built environment;Development and experimental evaluation of a thermography measurement system for real-time monitoring of comfort and heat rate exchan", MEASUREMENT SCIENCE AND TECHNOLOGY, IOP, BRISTOL, GB, Bd. 23, Nr. 3, 1. Februar 2012 (2012-02-01), Seite 35005, XP020219569, ISSN: 0957-0233, DOI: 10.1088/0957-0233/23/3/035005**
• **T ASTARITA ET AL: "A survey on infrared thermography for convective heat transfer measurements", OPTICS & LASER TECHNOLOGY, Bd. 32, Nr. 7-8, 1. Oktober 2000 (2000-10-01), Seiten 593-610, XP055082176, ISSN: 0030-3992, DOI: 10.1016/S0030-3992(00)00086-4**
• **JONAS ALLEGRINI ET AL: "Analysis of convective heat transfer at building faÃPRG ades in street canyons and its influence on the predictions of space cooling demand in buildings", JOURNAL OF WIND ENGINEERING AND INDUSTRIAL AERODYNAMICS, Bd. 104, 24. Februar 2012 (2012-02-24), Seiten 464-473, XP028429912, ISSN: 0167-6105, DOI: 10.1016/J.JWEIA.2012.02.003 [gefunden am 2012-02-07]**

- STRAND R K ET AL: "Modeling radiant heating and cooling systems: integration with a whole-building simulation program", ENERGY AND BUILDINGS, LAUSANNE, CH, Bd. 37, Nr. 4, 1. April 2005 (2005-04-01), Seiten 389-397, XP027756761, ISSN: 0378-7788 [gefunden am 2005-04-01]
- Wolfgan Feist: "Passiv-VerwaltungsgebäudeWagner & Co. in Cölbe", , Februar 2002 (2002-02), XP002714823, Gefunden im Internet: URL:http://www.enob.info/fileadmin/media/Publikationen/EnBau/Projektberichte/03_MonitoringAB2_Wagner_p2_k.pdf [gefunden am 2013-10-14]
- JONATHAN D MARKLEY ET AL: "Hybridization of Photogrammetry and Laser Scanning Technology for As-Built 3D CAD Models", 2008 IEEE AEROSPACE CONFERENCE; 1-8 MARCH 2008; BIG SKY; MT, USA, IEEE, PISCATAWAY, NJ, USA, 1. März 2008 (2008-03-01), Seiten 1-10, XP031256520, ISBN: 978-1-4244-1487-1

**Beschreibung**

Die Erfindung betrifft ein Verfahren zum Messen und Berechnen eines Wärme- bzw. Energietransports durch eine Hüllfläche.

Es wird insbesondere ein integriertes HW- und SW-System zur Messung und Berechnung von Wärmeenergieverlusten, von Wärmewiderständen, effektiven Wärmekapazitäten $C_w$ sowie der zugehörigen thermischen Trägheitskonstanten $\tau_w$ von Oberflächen (von Bauteilen) von Geräten, Anlagen, Gebäude usw. vorgestellt.

Die Erfindung bezieht sich auf eine Vielzahl von Mess- und Berechnungsverfahren sowie EDV-Systeme zur Messung, Analyse, Darstellung und Ermittlung von Energieverlusten sowie von Energie-Kennwerten in der Gebäude-, Anlagen- und Elektrotechnik. Hierbei werden insbesondere die Technologiegebiete Thermografie bzw. berührungslose (IR-) Temperaturmesstechnik, Thermo- und Strömungsdynamik, Fotogrammmetrie und optische Entfernungsmesstechnik benutzt.

Stand der Technik

Eines der Hauptanwendungsgebiete der Erfindung ist die Gebäudetechnik, dort insbesondere die Gebäudeenergietechnik. An Hand dieses Anwendungsgebietes wird im Folgenden der Stand der Technik und der durch die Erfindung erzielbare Fortschritt erläutert.

Zur Messung von (Wärme-)Lnergieverlusten "im Feld" gibt es derzeit nur aufwändige Analyse- und Messverfahren. Die zugehörigen Energiekennwerte ($R_w$, $C_w$, $\tau_w$, ...) der Bauteile werden aber für alle Berechnungen bei Bau- bzw. Sanierungsprojekten benötigt und müssen ggf. zeit- und arbeitsaufwändig einzeln beschafft/ermittelt werden. Aus dem Stand der Technik sind Wärmemodelle mit Berücksichtigung von Konvektion und Rückstrahlung aus der JP2000206268 bekannt. Weiterhin offenbart Revel G. M. et al. in "Development and Experimental Evaluation of a Thermography Measurement System for Real-time Monitoring of Comfort and heat rate Exchange in the Built Environment" ,Measurement Science & Technology, Vol. 23(3), S. 1-12 ein weiteres Wärmemodell mit globaler Erfassung der Rückstrahlung.

Verschiedenen BRD- und EU-Initiativen haben zur drastische und nachhaltigen Verminderung der (Primär-) Energieverbräuche im Gebäudebereiche (Z.B. ENEV 2009/2012, EEG, ...) geführt. Sie haben EU-weit den Stand der Berechnungs- und Simulationsmodelle für Gebäudeenergietechnik auf einen inzwischen sehr hohen Stand gebracht. Die Bauphysik hat dafür tragfähige Grundlagen gelegt und die Entwicklung von dynamischen und statischen Simulationsmodellen für den Wärmetransport durch nahezu beliebige Material- und Schichtanordnungen sowie für nahezu beliebige Geometrieen von Bauteilen ermöglicht. Der "Energiebereater Plus 18599" der deutschen Firma Hottgenroth bzw. das (Physik-) Simulationspaket COMSOL der gleichnamigen schwedischen Firma COMSOL sind nur zwei Beispiele dafür. Alle diese Modelle benötigen als Eingabeinformation eine sehr detaillierte, genaue und vollständige Angabe der Gebäude- bzw. aller (Bauteil-) Geometrieen sowie eine genaue Kenntnis des jeweiligen Wandaufbaus mit allen Schichten, deren jeweiliger Lage, Dimension und physikalischen Eigenschaften. Diese physikalischen Materialeigenschaften sind in großen Parametersammlungen, zumeist von staatlichen bzw. halbstaatlichen stellen (z.B. CSTB in F) erstellt, für den Einsatz in Nachschlagewerken bzw. in Simulationsmodellen frei verfügbar. Außer der dort eingesetzten und nur im Labormaßstab nutzbaren kalorimetrischen Messtechnik, zur Bestimmung von Wärmewiderständen, Wärmekapazitäten etc. gibt es derzeit keine im Gebäudebestand verlässlich einsetzbare Messtechnik für diese zentralen Energiekennwerte von Materialien und Bauteilen. Der Einfluss der (Gebäude-) Umgebung wird hingegen i.d.R. gar nicht - was aus Aufwandsgründen für die meisten dynamischen Modelle zutrifft - bzw. nur sehr stark schematisiert (z.B. lediglich via mittlerer Monats- bzw.- Jahrestemperaturen der Umgebungsluft) berücksichtigt. Der Einfluss der Luftströmung, der Luftfeuchte, des Regens bzw. Schnees sowie der sehr erhebliche Einfluss der jeweiligen Strahlung von Himmel/Sonne bzw. der Umgebung wird dabei i.d.R. überhaupt nicht berücksichtigt.

Am Beispiel der Gebäudeenergietechnik wird deutlich, dass viele dieser notwendigen Informationen häufig nicht vorliegen bzw. nur mit sehr großen Aufwand, z.B. via Analysen von Kernbohrungen der zu messenden/untersuchenden Wände, zu beschaffen sind. Sie liegen eigentlich nur für Neubauvorhaben mit detaillierten Plänen, Material- und Stücklisten vor. Gebäude haben i.d.R. mittlere Lebensdauern (bis zu einer vollständigen "Kernsanierung", was vom Aufwand her in etwa einem Neubau entspricht) von 30-60 Jahren. Damit liegt die benötigte genaue Kenntnis von Geometrie und Struktur eines Gebäudes insbesondere im Falle von Renovationen/Sanierungen i.A. nicht vor. So ist man meist zu einem langwierigen und fehleranfälligem "händischen" vor Ort Messen der Geometrie eines solchen Gebäudes gezwungen. Die Struktur der jeweiligen Decken/Wände lässt sich nur durch eine sehr kosten- und zeitaufwändige sowie teure Kernbohrungsanalyse ermitteln. Der Einsatz der geschilderten Gebäudesimulationsmodelle erfordert eigentlich alle diese sehr teuren Untersuchungen, da andere ausreichend genaue und kostengünstige Messverfahren für die benötigten Parameter derzeit nicht existieren. Dieser derzeit ungenügende Stand der (Mess-) Technik macht die Datenaufnahme zur energetischen Sanierung eines Bestandsgebäudes zu einem aufwändigen, langwierigen und i.A. auch sehr fehleranfälligen Prozess, der auch bei einem EFH sehr viel Zeit in Anspruch nimmt.

Die fehlende und explizite Berücksichtigung der physikalisch korrekten Energieübertragungsmechanismen in das Bauteil bzw. in die Bauteilumgebung ist ein weiterer, derzeit erheblicher Mangel in den Normen und Modellen der Gebäudeenergietechnik. Diese Übertragungsmechanismen sind

- die Wärmeleitung in den Boden, leider mit meist relativ ungenau bekannter Struktur, Temperatur sowie Physik,
- die Konvektion mit dem umgebenden Luftraum sowie
- der (IR-) Strahlungsenergieaustausch mit der Umgebung, insbesondere aber mit dem Himmel/Weltraum und der Umgebung.

Die letzten beiden Mechanismen weisen beide i.d.R. ganz sicher nicht die in den Modellen angenommene mittleren Tages-(Luft-) Temperaturen sondern davon erheblich verschiedene Werte auf. Die zur Berücksichtigung dieser Übertragungsmechanismen nach ENEV bzw. DIN-EN-ISO definierten $R_{Si}$- bzw. $R_{Se}$-Werte haben keine physikalische Realität. Sie sind "Hilfskonstruktionen" um mit den (Norm-) Fehlern der Modelle zumindest im Monats- bzw. Jahresmittel leben zu können. Für Messzwecke sind sie bestenfalls irreführend.

Abschließend muss noch festgehalten werden, dass es leider derzeit keine optische Mess- und Abbildungstechnik gibt, die es erlaubt die Dimensionen einer Bauteil- bzw. Gebäudeoberfläche schnell - sozusagen mit einer Kamera-Aufnahme - und mit hinreichender Genauigkeit zu ermitteln. Die derzeit bekannten und auch industrialisierten Verfahren können dies nicht. Hier ist eine bezahlbare und sinnvolle Kombination und Integration von Verfahren und Instrumenten noch zu leisten.

Vor diesem Hintergrund werden ein Verfahren mit den Merkmalen des Anspruchs 1 und eine Anordnung gemäß Anspruch 10 vorgestellt. Ausführungen ergeben sich aus den abhängigen Ansprüchen und der Beschreibung.

Es wird somit Verfahren zur Berechnen eines Wärmetransports durch eine Hüllfläche vorgestellt, bei dem eine Wärmestrahlung und eine Konvektion berücksichtigt werden, wobei zur Ermittlung der Wärmestrahlung eine Oberflächentemperatur der Hüllfläche und eine Rückstrahltemperatur der die Hüllfläche umgebenden Hemisphäre berücksichtigt werden.

Es kann vorgesehen sein, dass zur Ermittlung der Oberflächentemperatur eine Wärmebildkamera verwendet wird. Weiterhin kann zur Ermittlung der Rückstrahltemperatur eine Wärmebildkamera verwendet werden. Typischerweise wird für beides genau eine Kamera verwendet, mit der eine direkte Messung ermöglicht ist.

Weiterhin können bei der Berechnung der Konvektion Geometriebedingungen der Hüllfläche berücksichtigt werden. Diese können wiederum mit einer Kamera oder auch genau mit der einen Kamera, mit der die Oberflächentemperatur bzw. eine Oberflächentemperaturverteilung gemessen wird, ermittelt werden.

In Ausgestaltung wird ein konduktiver Wärmeübergang zu einer Bodenfläche berücksichtigt. Ein typisches Anwendungsgebiet ist bei einer Hüllfläche, die durch ein Gebäude definiert ist.

Im Falle einer teilweisen Integration bzw. Bedeckung des Messobjektes in bzw. durch ein unbekanntes Wärmeleitungsmedium - hier Boden genannt - können auch die Wärmeleitungsverluste in den Boden durch Differenzbildung einer integralen Innen- und Außen-Messung bestimmt werden.

In Ausgestaltung werden die jeweiligen Oberflächentemperaturen aller Flächenelemente mittels Kamera bzw. Sensor berührungslos erfasst und ihre jeweilige tatsächliche Lage und Geometrie im Raum durch ein integriertes Geometriemesssystem gleichzeitig mit erfasst und berechnet.

Zudem kann der Strahlungsenergieeintrag der Messobjektumgebung in jedes vermessene Flächenelement durch einen integrierten $2\pi$-Halbraum-Strahlungssensor nach mindestens zwei einstellbaren Raumwinkeln ($\varphi_{Sky}$, $\varphi_{Earth}$) getrennt und mit der Messung der Oberflächentemperaturen der jeweiligen Flächenelemente gleichzeitig mit erfasst werden.

Der $2\pi$-Halbraum-Strahlungssensor kann den zu messenden Halbraum in MxK gleiche/ungleiche Raumwinkel aufteilen, getrennt vermessen und die jeweiligen Strahlungstemperaturen der einzelnen Raumwinkel raumwinkelanteilskorrekt an das integrierte Messsystem weitergeben.

Außerdem kann das kameraintegrierte Geometriemesssystem gleichzeitig mit der Temperaturmessung mittels mindestens 3er Messstrahlen ($S_1$, $S_2$, $S_3$, ...) mit bekannten Winkeln ($\alpha_{12}$, $\alpha_{13}$, $\alpha_{12}$, ..) zueinander jeweils mindestens 3 Punkte ($P_1$, $P_2$, $P_3$, ...) auf der jeweiligen Messfläche in Lage und Abstand zur Bildebene der Kamera vermessen und so durch einfache trigonometrische Berechnung jedem Bildpixel des Messobjektes reale physikalische Dimensionen (z.B. in m) zuordneen und damit dem Gesamtbild der Wärme- bzw. Messkamera ebenfalls reale x/y/z-Koordinaten zuordnen.

Es wird weiterhin eine Anordnung zur Berechnen eines Wärmetransports durch eine Hüllfläche, insbesondere zur Durchführung eines vorstehend erörterten Verfahrens mit den Merkmalen von Anspruch 10 vorgestellt.

Diese Anordnung kann eine Mess- bzw. Wärmekamera umfassen, in Ausgestaltung genau eine Kamera.

Die Anordnung wird nachfolgend auch als Messsystem bezeichnet, das auch ein Analysesystem umfassen kann.

Ein integriertes Analysesystem bestimmt alle konvektiven und Strahlungsenergieströme durch die Oberfläche eines Bauteiles nach Art, Richtung und Umfang. Es ermittelt daraus die zugehörigen Energiekennwerte der Bauteile. Es besteht aus mindestens zwei Umweltparameter-Messgeräten, einem Umgebungsstrahlungsmesser, einer Thermokamera und einem Auswertesystem zur Ergebnis- und Berichterstellung.

Es wird die Messung von Energiekennwertteen sowie von Geometrieen in der Gebäudeenergietechnik ermöglicht. Die Messung analoger Fragestellungen der Elektro-, Geräte- und/oder der Anlagentechnik ist ebenso möglich.

Mit dem Verfahren ist es möglich, die für eine Bestimmung der (Wärme-) Energieverluste benötigten Parameter physikalisch korrekt, vollständig, schnell und ohne übermäßigen Zeit- und Geräteaufwand zuverlässig zu erfassen, um dann daraus die entsprechenden Energieverlustkennwerte möglichst automatisch berechnen zu können. Zu diesen Mess- und Analyse-Parametern gehören insbesondere

- die 3D-Geometrie und Struktur des Messobjektes und aller seiner relevanten Oberflächen in realen 3D-Koordinaten,

- die (energieübertragungs-) relevanten Parameter der das Messobjekt umgebenden Medien/Fluide wie $T_{Luft}$, $V_{Luft}$, Feuchte, ...,

- die (energieübertragungs-) relevanten Parameter aller am Energieaustausch beteiligten Oberflächen des Messobjektes wie $T_{Si}/T_{Se}(i,k)$, Neigungswinkel, Rauigkeit, ...,

- die (energieübertragungs-) relevanten Parameter des das Messobjekt umgebenden Raumes sowie aller am (Strahlungs-) Energieaustausch teilnehmenden Objekte darin.

Aus den Messwerten dieser Parameter kann dann physikalisch korrekt und mit möglichst hoher Genauigkeit, d.h. bei physikalisch geeigneter Modell- bzw. Fall-Wahl, der tatsächliche (Wärme-) Energiestrom in/aus der jeweiligen Bauteiloberfläche in Betrag und Richtung zu ermitteln.

Der Erfindung liegen somit folgende 7 Aufgaben für die Entwicklung eines integrierten Systems zur Messung und Berechnung von Wärmeenergieverlusten durch Oberflächen bzw. von Wärmewiderständen ($R_w$ bzw. $U_w=1/R_w$), effektiven Wärmekapazitäten $C_w$ sowie den zugehörigen thermischen Trägheitskonstanten $\tau_w$ dieser Oberflächen von Geräten, Anlagen, Gebäuden, etc. zu Grunde:

1. Einfache, kostengünstige und schnelle Messung/Bestimmung der i.A. 3D-Dimensionen des Messgegenstandes (Wand, Oberfläche, etc.) in allen 3 Raumrichtungen mit zumindest hinreichender Genauigkeit für eine weitere Verwertung in der anschließenden (Gebäude-) Modellierung und Simulation.

2. Einfache, kostengünstige und schnelle Bestimmung von Strukturen/Objekten (z.B. Simse, Fenster, Tür, Dach, Balkon, etc.) auf und innerhalb des i.A. 3D-Messgegenstandes (Wand, Oberfläche, etc.) mit zumindest hinreichender Genauigkeit für eine weitere Verwertung in der anschließenden (Gebäude-) Modellierung und Simulation.

3. Einfache, kostengünstige und schnelle Messung/Bestimmung aller nötigen (Fluid-) Umgebungsparameter wie Lufttemperatur, -feuchte, der Luftbewegungen (Wert und Richtung) sowie der Strahlungsintensität der ganzen 3D-Umgebung des Messgegenstandes (Wand, Oberfläche, etc.) mit zumindest hinreichender Genauigkeit für ein verwertbares Gesamtergebnis und der anschließenden Nutzung in der (Gebäude-) Modellierung und Simulation.

4. Schnelle, genaue und physikalisch korrekte Berechnung aller für das (anschließende) Simulationsmodell benötigten Parameter, wie den Dimensionen von Bauteilen (Wand, Oberfläche, etc.) sowie den Dimensionen der darin enthaltenen Komponenten (z.B. Fenster, Türen, Dachgauben, Balkone, etc.) und deren jeweilige Energiekennwerte ($P_v$, $R_w$, $C_w$, ...).

5. Einfache, kostengünstige und schnelle Messung/Bestimmung aller nötigen Parameter des Messgegenstandes (Wand, Oberfläche, etc.) zur Berechnung des (Wärme-) Energiestromes durch seine Oberfläche in Wert und Richtung mit zumindest hinreichender Genauigkeit für ein verwertbares Gesamtergebnis und der anschließenden Nutzung in der (Gebäude-) Modellierung und Simulation.

6. Schnelle, genaue und physikalisch korrekte Berechnung aller für das (anschließende) Simulationsmodell benötigten Geometrie-Parameter, wie den Dimensionen von Bauteilen (Wand, Oberfläche, etc.) sowie den Dimensionen der darin enthaltenen Komponenten (z.B. Fenster, Türen, Dachgauben, Balkone, etc.) und deren jeweilige Energiekennwerte ($P_v$, $R_w$, $C_w$, ...).

7. Angabe einer Ablaufsteuerung und der entsprechenden Systemarchitektur für das zugehörige EDV-System

Zu 1) Einfache Bestimmung der realen Geometrie des Messobjektes in allen 3 Raumrichtungen:

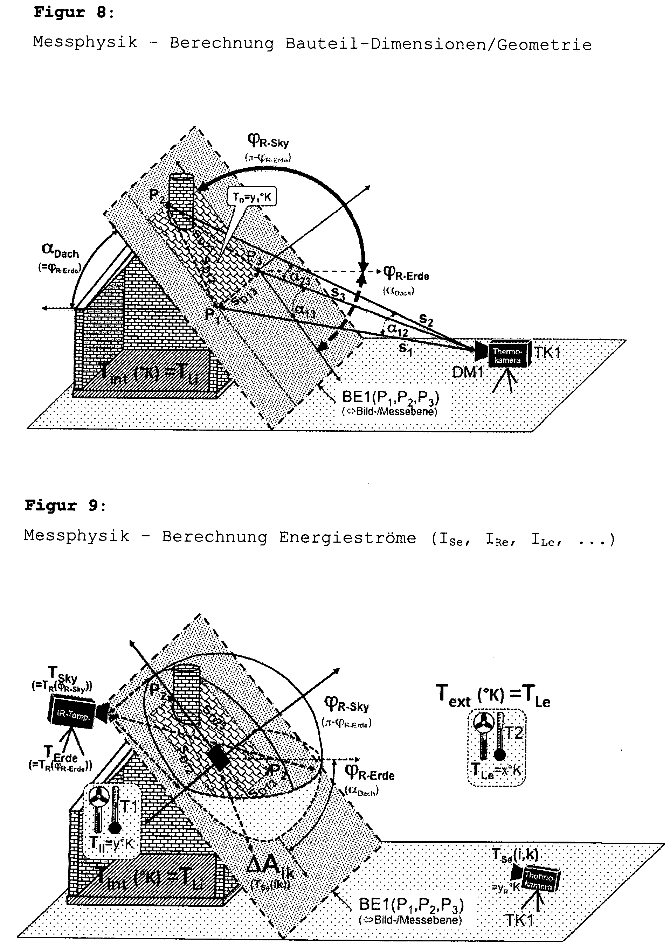

Die direkte Lasermessung von Distanzen ist derzeit die genaueste und preiswerteste Methode die Dimensionen eines Objektes sehr genau zu erfassen. Allein sie ist zeitaufwändig. Fotogrammmetrische Methoden sind i.A. weniger genau, aber sehr zeit- und kosteneffizient. Ein Ersetzen der zeitaufwändigen (Laser-) Messung von mindestens 2 sonst i.A. willkürlich gewählten Referenzlinien in der Bildebene des Messobjektes durch mindestens 3 genau vermessene Punkte in eben jener Bildebene löst dieses Problem nachhaltig. Dies kann sehr einfach durch 3 fest mit der bildaufnehmenden Optik korrelierte (Laser-) Distanzmesser (z.B.DM1 in Figur 8) geschehen. Sind ihre Messstrahlen in-Fokus, wie in Figur 8 dargestellt, so gibt es eine trigonometrisch einfach zu bestimmende feste Zuordnung der jeweiligen im Raum relativ zum Messbild bestehenden Position des Messpunktes und seinen "Bildkoordinaten" in x-/y-Pixeln. Sind sie nicht in-Fokus, so muss abstands- und neigungsabhängig der sich nun notwendig einstellende Parallaxenfehler berechnet werde. Nach diesen Berechnungen kann man jedem Bildpunkt reale x-/y/z-Koordinaten (z.B. in m) zuordnen und die relative Lage der Messebene zur Bildebene der Kamera und damit im Raum bestimmen.

Zu 2) Einfache Bestimmung von Strukturen/Objekten auf und innerhalb des 3D-Messgegenstandes:

Hat man die Messfläche gemäß 1) mit realen (Bild-) Pixelkoordinaten versehen, so liefert jeder Bildverarbeitungsalgorithmus der nach Mustern/Strukturen im Bild sucht deren Dimensionen zunächst in Pixel- und dann in realen Dimensionen. Somit kann man das Identifizieren und das Vermessen von Objekten/Strukturen auf/in der Messobjektebene ohne Verlust an Genauigkeit zumindest teilautomatisieren. Dies ist ein nicht unbeträchtlicher Zeit- und Kostenvorteil bei der Datenaufnahme von Messobjekten wie Gebäuden etc.

Zu 3) Einfache Bestimmung der Parameter des Umgebungsfluides:

Nachdem ein beliebiges Messobjekt sich meist nicht im luftleeren Raum befindet sondern sich eher innerhalb unserer (Luft-) Atmosphäre aufhält, ist auch der Energieaustausch aller seiner Oberflächen mit diesem es umgebenden Fluid unbedingt zu berücksichtigen. Es müssen daher, zusammen mit den anderen (energieaustausch-) relevanten Parametern, unbedingt diese Parameter möglichst gleichzeitig mit erfasst werden. Dies gelingt i.d.R. relativ einfach mit dafür geeigneten speziellen Messgeräten T1, T2 (z.B. für $T_{Luft}$, $v_{Luft}$, Feuchte, ...), die z.B. via Funk ihre Messergebnisse direkt an das Gesamtsystem zur weiteren Verarbeitung liefern. So kann die Integration auch dieser Messungen/Ergebnisse in das Gesamtsystem einfach und kostengünstig gewährleistet werden.

Zu 4) Einfache Bestimmung der Parameter des das Messobjekt umgebenden Raumes:

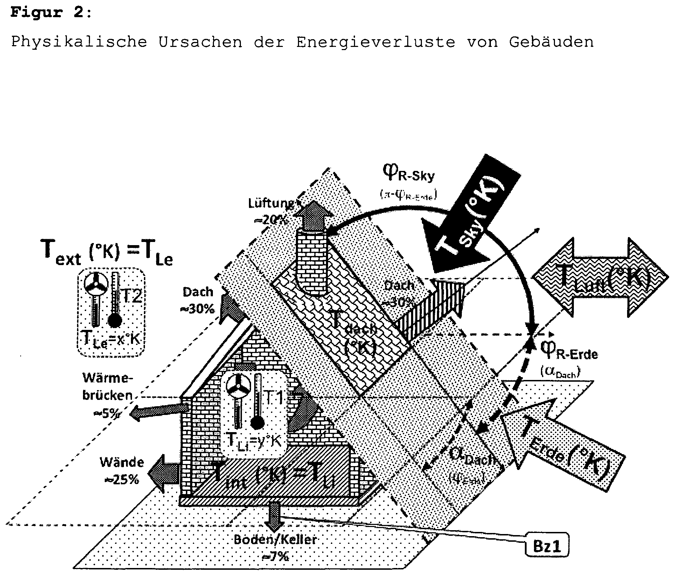

Ist der umgebende Raum leer bzw. mit (IR-) transparenten Medien/Fluiden gefüllt, so muss sein Anteil am nun Strahlungsenergieaustausch mit der jeweiligen Messoberfläche ebenfalls und gesondert berücksichtigt werden. Aufgrund des hier herrschenden Planck'schen Strahlungsgesetzes mit seiner $T^4$-Proportionalität spielen hier selbst kleine Temperaturdifferenzen eine mehr als 4-fach größere Rolle als bei allen anderen Wärmetransportmechanismen. Darum ist es essentiell die wesentlichen Teilnehmer am Energieaustausch physikalisch korrekt zu erfassen. Wie man in Figur 2 bzw. Figur 9 klar erkennen kann, sind dies zum Glück im Wesentlichen nur drei wirklich bedeutsame Teilnehmer. Diese sind

- das jeweilige Oberflächenelement $\Delta A(i,k)$ selbst,
- der das Oberflächenelement $\Delta A(i,k)$ umgebende (mehr oder weniger leere) Weltraum/Himmel mit $T_{Sky}$ und
- die vom Oberflächenelement $\Delta A(i,k)$ jeweils sichtbare Landschaft/Umgebung, mithin die Erde mit $T_{Erde}$.

Wie man leicht erkennen kann werden die Strahlungseigenschaften von Himmel bzw. Erde von dem Messobjekt bzw. von $\Delta A(i,k)$ nicht beeinflusst und sie können somit als (rein) schwarze Strahler physikalisch korrekt modelliert werden. Genau dies ermöglicht nun die (genaue) Messung der "Rückstrahlung" der (Strahl-) Umgebung auf das/jedes Flächenelement $\Delta A(i,k)$ mit einem speziellen IR-Sensor TK2 bzw. einer Thermokamera TK2, wie das z.B. wie in Figur 9 dargestellt wird. Damit kann die ansonsten nahezu immer unmögliche Aufstellung und Auflösung der Planck'schen Strahlungsaustauschintegrale vermieden werden und der (Strahlungs-) Energieaustausch eines jeden $\Delta A(i,k)$ und damit auch der des Messobjektes mit dem umgebenden Raum berechnet werden! Diese Methode ist mitnichten auf diese - zwar für Gebäude i.d.R. hinreichend genaue - einfache Aufteilung der (Strahlungs-) Umgebung eines Messobjektes beschränkt. Setzt man z.B. zur Messung dieser "Rückstrahltemperatur" eine $2\pi$-Thermokamera (z.B. TK2 in Figur 9) mit MxK-Pixeln ein, so kann die entsprechende Umgebung leicht in eben jener Auflösung abgebildet und in der Energiebilanz auch korrekt berücksichtigt werden. Dies sollte selbst für "komplexe thermische Umgebungen" ausreichend genau sein! An diesem Beispiel sieht man aber auch, dass die sehr einfache "Gebäude-Lösung" mit nur 2 "Rückstrahltemperaturen" ($T_{Sky}$, $T_{Erde}$) eigentlich meistens hinreichend genau ist, solange man die $T^4$-Mittelung für die MxK-Raumwinkelanteile einer analog eingesetzten $2\pi$-Thermokamera berücksichtigt.

Zu 5) Einfache Messung der energiestromrelevanten Oberflächenparameter des Messobjektes:

Diese Parameter sind (gemäß VDI-Wärmeatlas) sowohl geometrischer als auch physikalischer Natur. Die/alle relevanten geometrischen Parameter (z.B. $L_{char}$, $\alpha_{Dach}$, ...) liefert gemäß 1) und 2) das integrierte Geometriemesssystems (DM1 in Fig8 mit Auswertesystem). Die physikalisch relevanten Parameter, hier vor allem die jeweiligen Oberflächentemperaturen (ggf. auch Rauigkeiten, Texturen, etc.) liefert die ebenfalls integrierte (Thermo-) Kamera TK1 physikalisch korrekt als Bildinformation mit allen $T_{Se}$/$T_{Si}$ (i,k). Weitere Messwerte werden zur physikalisch korrekten Ermittlung des Konvektions- und des Strahlungsanteils am die jeweilige Oberfläche durchströmenden (Wärme-) Energiestrom außer den bereits unter 1) bis 4) gesammelten Messwerten nicht benötigt.

Zu 6) Physikalisch korrekte Berechnung der Geometrie-Parameter sowie der Energiekennwerte ($P_v$, $R_w$, $C_w$, ...):

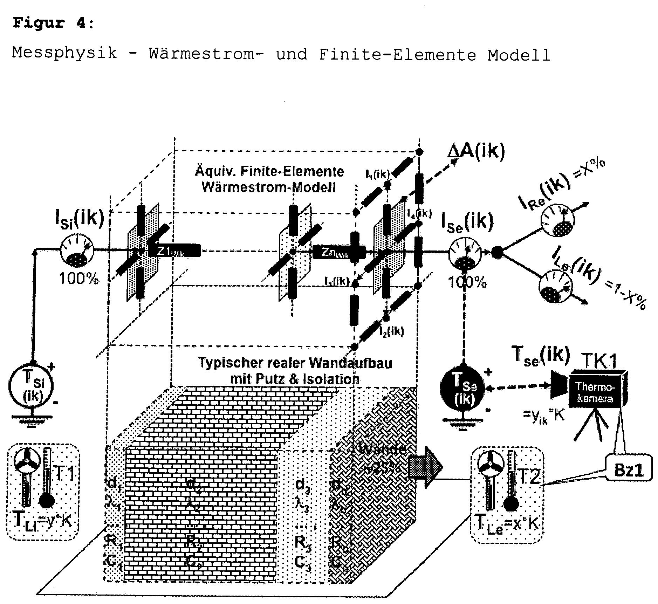

Der gesamte (Wärme-) Energiestrom durch eine (Mess-) Oberfläche $I_{Se}$/$I_{Si}$(i,k) hat, wie in den Figuren 4, 5 und 9 detailliert dargestellt und erläutert wird, genau zwei Anteile,

- den i.A. bedeutenderen und wg. des Planck'schen Strahlungsgesetzes sehr stark (>4x) temperaturdifferenzabhängigen Strahlungsanteil $I_{Re}$/$I_{Ri}$(i,k) und den

- Konvektionsanteil $I_{Le}$/$I_{Li}$ (i, k) mit dem Umgebungsfluid (meist Luft), welcher nur linear von der jeweiligen Temperaturdifferenz abhängig ist.

Diese beiden Parameter müssen daher stets getrennt betrachtet und berechnet werden.

Der Strahlungsanteil $I_{Re}$/$I_{Ri}$(i,k) kann hierbei gemäß den Annahmen und Vereinfachungen unter 4) als reine Summe der "Schwarzkörperstrahlungen" von $\Delta A$(i,k) und der jeweiligen Strahlungsumgebung (z.B. $T_{Sky}$, $T_{Erde}$) berechnet werden.

Zur Berechnung des Konvektionsanteils $I_{Le}$/$I_{Li}$(i,k) des Energiestromes mit dem Umgebungsfluid (Luft) muss jedoch zusätzlich zwischen einer Vielzahl von Fällen unterschieden werden. Er muss daher getrennt berechnen, je nach den jeweiligen Messwerten für $T_{Luft}$, $V_{Luft}$ (in Wert und Richtung), Neigung (z.B. $\alpha_{Dach}$) der Fläche zur Horizontalen/Vertikalen sowie der Geometrie der Fläche ($\Leftrightarrow L_{char}$). Zusammen mit weiteren Bedingungen für laminare und/oder turbulente Strömung am Messort (i,k) muss das Auswertesystem diese Werte möglichst automatisch berücksichtigen (siehe FIG9). Die zur Berechnung nötigen Fallunterscheidungen und die davon abhängige richtige Auswahl der anzuwendenden Berechnungsformeln (siehe Figur 9) für die benötigten Nusselt-, Raleigh-, Grashof-, Prandtl- und Reynold-Zahlen sind ebenfalls vom Auswertesystem möglichst automatisch und in jedem Falle physikalisch korrekt zu treffen. Dies ist in Anbetracht der Komplexität der im VDI-Wärmeatlas ausgeführten Vielzahl unterschiedlichster Fälle keine einfache Aufgabe. Sie muss bei der Auswertesystementwicklung mit großer Sorgfalt und hohem physikalischem Sachverstand geleistet werden.

Zu 7) Ablaufsteuerung und Systemarchitektur:

Die Messwerte der jeweiligen Oberflächen des Messobjektes und die jeweiligen Messwerte für die Umbungsstrahlung sollten möglichst gleichzeitig ermittelt werde. Die Messwerte für die Umgebungsluft bzw. das Fluid hingegen werden i.A. durch eine zeitliche Mittelung genauer. Hier ist ggf. eine die eigentliche Thermografische Vermessung des Messobjektes übersteigende Messperiode sogar empfehlenswert. Sie liefert i.A. physikalisch sinnvollere Mittelwerte.

Die Geometrie-Messwerte fallen hier erfindungsgemäß stets zusammen mit den Temperatur- und Umgebungsmesswerten der thermografischen Untersuchung an. Sie tun dies also genau dann, wenn sie auch für die Berechnung benötigt werden. Dies vereinfacht Systemarchitektur und Ablaufsteuerung erheblich. Sie muss also ggf. nur noch dafür sorgen, dass die "trägeren", weil i.d.R. gemittelten Messwerte für das Umgebungsfluid (ggf. automatisch) auch noch später "nachgepflegt" werden können.

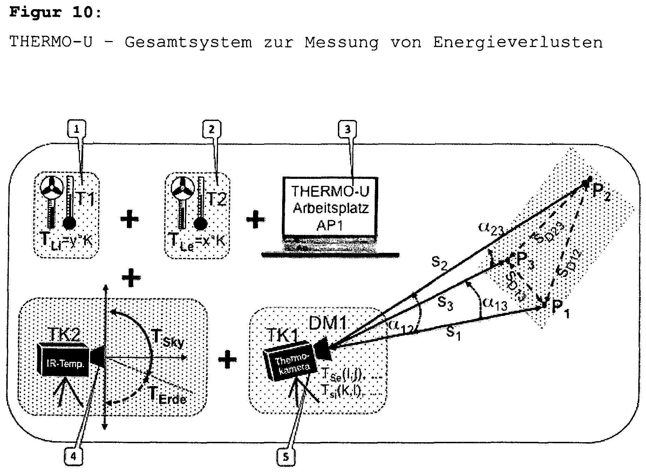

Ein Rechnerarbeitsplatz mit einer vollständigen Auswerte-, Analyse- und Berichts-SW komplettiert diese Systemarchitektur zur komfortablen, schnellen und kostengünstigen (vollständigen) thermischen Analyse von nahezu beliebigen 3D-Messobjekten (siehe Figur 10).

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung dargestellt und wird im folgenden unter Bezugnahme auf die Zeichnung näher erläutert.

Figur 1     zeigt typische Verluste eines Wohnhauses.

Figur 2     zeigt physikalische Ursachen der Energieverluste von Gebäuden.

Figur 3     zeigt Energieverluste von Gebäuden und ein Wärmestrommodell.

Figur 4     zeigt die Messphysik anhand eines Wärmestrom- und Finite-Elemente-Modells.

Figur 5     zeigt die Messphysik anhand eines Äquivalenz-Wärmestrom- und Wärmebild-Modells.

Figur 6     zeigt die Messphysik anhand der Differenzen der Physik im Vergleich zur ENEV 2009.

Figur 7     zeigt die Messphysik anhand der Berechnung der Energiekennwerte.

Figur 8     zeigt die Messphysik anhand der Berechnung der Bauteil-Dimensionen/Geometrie.

Figur 9     zeigt die Messphysik anhand der Berechnung der Energieströme.

Figur 9     zeigt die Anordnung zur Messung von Energieverlusten.

Figur 10    zeigt die Anordnung zur Messung von Energieverlusten

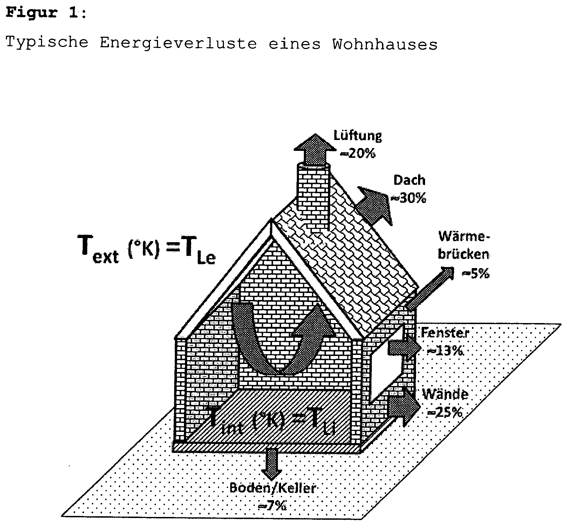

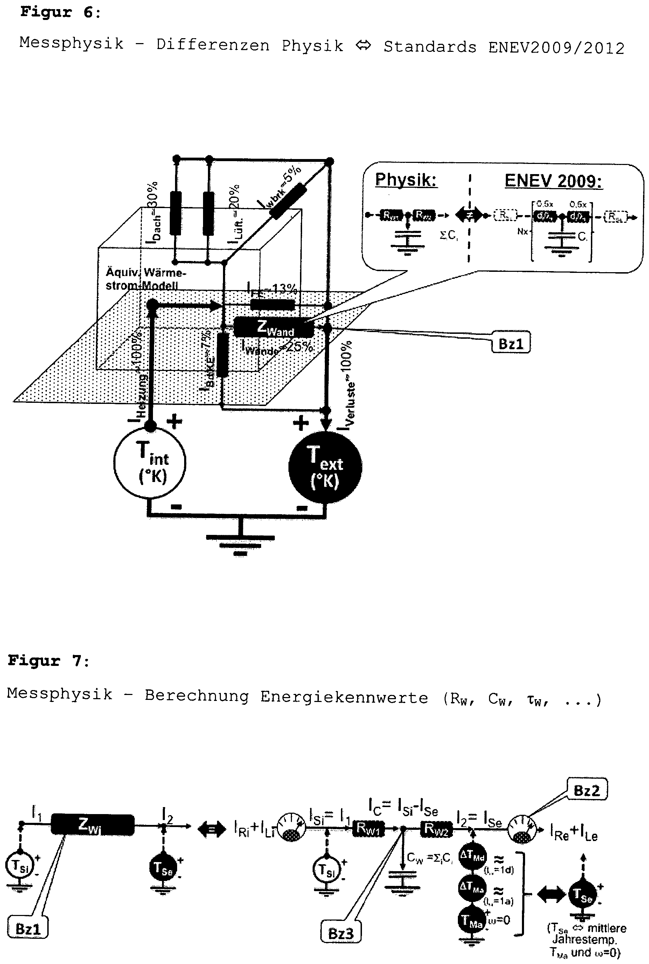

Die Erfindung wird somit anhand mehrerer Ausführungsbeispiele in den Figuren 1 bis 10 näher erläutert. Hierbei zeigen die Figuren 1 bis 10 Beispiele und Details sowohl für die (erstmalige) physikalische Korrektheit des Messverfahrens (Figur 1 bis 3, Figur 9) als auch für die physikalische Korrektheit der Modellierung (Figuren 4 bis 6). Die Figuren 7 bis 9 zeigen die erfindungsgemäßen Auswerteverfahren. Figur 2 bzw. Figuren 8 bis 10 zeigen die erfindungsgemäße Durchführung von Messung und Berechnung sowie die daraus resultierende Gesamtsystemarchitektur (Figur 10) des integrierten Messsystem, der Anordnung zur Durchführung des Verfahrens.

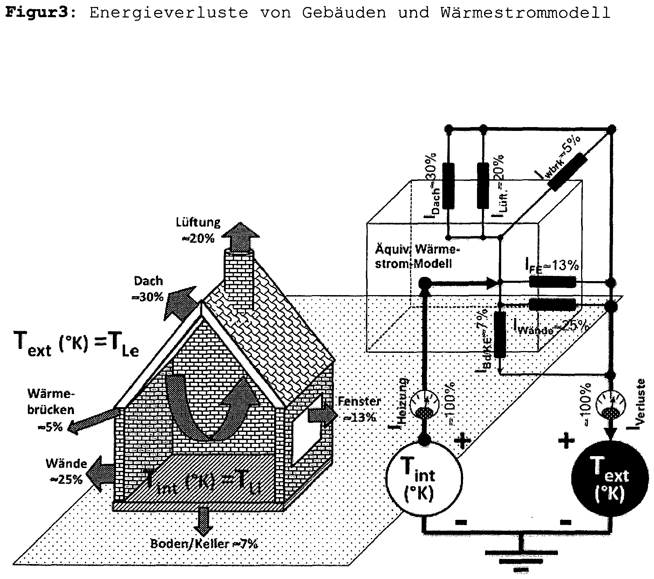

In den Figuren 1 bis 3 wird der (Wärme-) Energietransportmechanismus eines Messobjektes (hier Wohnhaus) in seine Umgebung veranschaulicht, die dafür wesentlichen Einflussfaktoren/Parameter (Figur 2) gezeigt und eine physikalisch korrekte Modellierung (Figur 3) dafür angegeben. Figur 9 zeigt abschließend, wie auf dieser Basis physikalisch korrekte Messungen und Berechnungen erfindungsgemäß an realen Messobjekten gemacht werden können.

In den Figuren 4 bis 6 wird dann Schritt für Schritt dargelegt, dass und warum diese Modellierung des (Wärme-) Energietransportes physikalisch korrekt ist (Figuren 4 bis 5) und warum es die Wärmebildmessung und die daraus abgeleiteten Energieströme korrekt modelliert. In Figur 6 wird dann abschließend gezeigt, warum die derzeitigen Werte und Definitionen der ENEV bzw. der DIN-EN-ISO 6946 physikalisch nicht korrekt und deshalb für ein Messverfahren nicht geeignet sind.

Die erfindungsgemäße Auswertung der Messungen zur Berechnung der Energiekennwerte ($R_w$, $C_w$, ...) wird in den Figuren 7 bis 9 gezeigt. Hierbei zeigt Figur 7 die physikalisch korrekte Ermittlung der Energiekennwerte ($R_w$, $C_w$, ...) auf der Basis von ggf. mehreren (Energie-) Strommessungen. Figur 8 und Figur 9 zeigen wie aus den verschiedenen Messwerten sowohl die nötigen Geometrie-Informationen (Figur 8) als auch abschließend die (Energie-) Ströme selbst (Figur 9) ermittelt werden können.

Figuren 1 bis 10:

Figur 1 zeigt an einem schematisierten Beispiel die typischen Quellen und Größenordnungen der (Wärme-) Energieverluste eines durchschnittlichen (Einfamilien-) Wohnhauses EFH (Werte sind typisch für Frankreich).

Figur 2 zeigt als Prinzipskizze alle 3 für die Energieverluste durch die jeweiligen Oberflächen nach Figur 1 verantwortlichen Wärmetransportmechanismen. Dies sind:

1. Die Wärmeleitung in den Boden mit $T_{Boden}=x_1°K$,
2. Die konvektive Erwärmung/Kühlung des an die jeweilige Fläche angrenzenden Fluides, hier Luft mit $T_{Luft}=x_2°K$,
3. Der Strahlungsaustausch mit dem jeweiligen die Fläche umgebenden $2\pi$-Halbraum. Hier sind für Gebäude insbesondere die (Strahlungs-) Temperaturen des Himmels mit $T_{Sky}=x_3°K$ bzw. der umgebenden Landschaft mit $T_{Erde}=x_4°K$ besonders wichtig.

Bz1: Wärmeleitung/-verluste in den Boden können aufgrund fehlender Temperaturen und Materialkenntnis ($T_{Boden}$, $\lambda_i$, $d_i$, ...) in der Regel nur indirekt bestimmt werden.

Figur 3 zeigt das zu den (typischen) Wärmeverlusten aus FIG1 zugehörige äquivalente Wärmestrom-Modell. In diesem Modell werden alle einen Raum umschließenden Wände/Oberflächen durch äquivalente Wärmewiderstände (genauer Impedanzen wg. der unvermeidbaren Wärmespeicherkapazitäten ihrer einzelnen Wandbestandteile/-schichten) modelliert. Weiter sind alle Wand- bzw. Oberflächen-Temperaturen jeweils den entsprechenden Potentialen/Spannungen im Wärmestrom-Modell äquivalent (z.B. $T_{int}=U(T_{int})$). Damit entsprechen nun alle (elektrischen) Ströme im Wärmestrom-Modell genau in Betrag und Richtung den jeweiligen (Wärme-) Energieströmen in bzw. durch die realen Bauteile/Oberflächen. Die Energieerhaltungssätze werden dabei von den Kirchhoff-Knoten- und Maschenregeln für Ströme bzw. Spannungen abgebildet.

Figur 4 zeigt schematisch an Hand einer Finite-Elemente-Elementarzelle wie eine typische reale Wandstruktur in ein äquivalentes Finite-Elemente-Wärmestrom-Modell abgebildet wird. In diesem Modell fließen alle (Wärmeenergie-) Ströme nur durch die i.d.R. materialabhängigen Impedanzen zwischen jeweils zwei von den sechs direkten Nachbarknoten ($i\pm1,k\pm1,z$) bzw. ($i,k,z\pm1$) jedes Knotens ($i,k,z$) des Modells. Der gesamte (Wärme-) Strom der somit in die bzw. aus der Wand/Oberfläche eines Bauteiles ein- bzw. austritt wird somit, wie in Figur 4 klar erkennbar, die Summe aller $I_{Si}(i,k,z_1)$ bzw. $I_{Se}(i,k,z_N)$ eines jeden modellierten Oberflächenpunktes mit der zugehörigen Temperatur/Spannung $T_{Si}(i,k,z_1)$ bzw. $T_{Se}(i,k,z_N)$, die von einer IR-Messkamera erfasst werden kann. Dieser (Wärmeenergie-) Strom wird an die jeweilige Strahlungs- ($\Leftrightarrow I_{Re}(i,k)$ bzw. $I_{Ri}(i,k)$) bzw. an die Konvektionsumgebung ($\Leftrightarrow I_{Le}(i, k)$ bzw. $I_{Li}(i,k)$) abgegeben bzw. von dieser aufgenommen. Die notwendige Energieerhaltung macht somit stets die Ströme $I_{Si}(i,k,z_1)$ bzw. $I_{Se}(i,k,z_N)$ gleich der Summe dieser Strahlungs- bzw. Konvektionsströme an der Stelle ($i,k,z_1/z_N$). Ihre Größe und Richtung wird so aus den Messergebnissen (IR-Bild und Umgebungsparameter) direkt ableitbar.

Bz1: Messung der Verluste $\Leftrightarrow \sum_{ik}I_{Se}(ik)$ :

- TK1$\Leftrightarrow$ ($T_{S11}$, $T_{S12}$, ..., $T_{S1n}$, ..., $T_{Smn}$)

- Verluste $\Leftrightarrow \sum_{ik}I_{Se}(ik)$ da $I_j(ik)=0$!

- $I_{Se}(ik) = I_{Re}(ik) + I_{Le}(ik)$

- $I_{Re}(ik) = F(T_{Se}(ik), T_{Re}(Umg.), \Delta A)$

- $T_{Re}(Umg.) = F(T_{Sky}, T_{Erde})$

- $I_{Le}(ik) = F(T_{Se}(ik), T_{Ler}, a_k, L_{char}, \Delta A)$

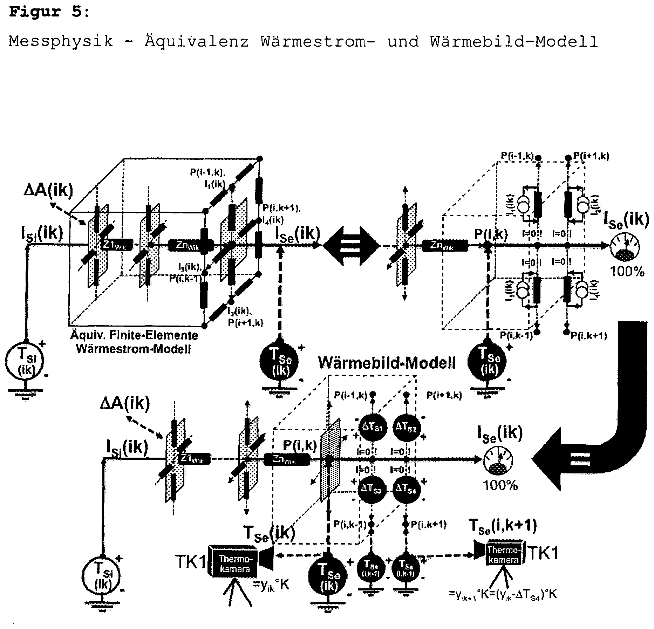

Figur 5 zeigt in drei Transformationsabschnitten die Umwandlung eines zu einem beliebigen Wand-/Oberflächenaufbau äquivalenten Finite-Elemente-Wärmestrommodells zu einem ebenfalls dazu äquivalenten (Finite-Elemente-) Wärmebildmodell. Hierbei werden die gemessenen Temperatur-/Spannungsunterschiede zwischen zwei beliebigen benachbarten Oberflächenpunkten ($i,k,z_K$) und ($j,l,z_K$) durch gesteuerte Stromquellen mit den zugehörigen (Impedanz-) Strömen zwischen eben jenen Punkten abgebildet (2. Transformationsschritt in Figur 5). Diese können nun gemäß den Kirchhoff-Gesetzen ($\Leftrightarrow$Energieerhaltung) durch stromlose Spannungsquellen mit den im Wärmebild gemessenen Temperaturdifferenzen $\Delta T_{Sk}$ zweier beliebiger Oberflächenpunkte $P(i,k,z_1/z_N)$ bzw. $P(j,l,z_1/z_N)$ ersetzt werden. Da alle anderen Ströme in/aus der Wand/Oberfläche somit verschwinden stellen die einzig von der jeweiligen Oberflächentemperatur $T_{Se}(i,k)$ bzw. $T_{Si}(i,k)$ abhängigen Ströme $I_{Se}(i,k)$ bzw. $I_{Si}(i,k)$ den gesamten (Wärme-) Energietransport in/aus der jeweiligen Wand-/Oberflächenstelle $P(i,k,z_1/z_N)$ dar. Dieser kann, besser muss also nur mit einer Thermokamera berührungslos erfasst werden, da jedes andere Messverfahren i.d.R. erhebliche Verfälschungen und Verzerrungen der Ergebnisse zur Folge hat.

Figur 6 zeigt die Unterschiede der erfindungsgemäß physikalisch korrekten Modellierung/Messung der (Wärme-) Energieströme $I_{Se}/I_{Si}$ durch Wand-/Bauteiloberflächen und den in allen (käuflichen) Gebäudesimulationsmodellen benutzten Standards nach DIN EN ISO 6946 ($\Leftrightarrow$ENEV 2009/2012). Da in diesen Modellen lediglich die (Außen-/Innen-) Lufttemperatur $T_{Le}/T_{Li}$ als einziger Umgebungsparameter auftaucht, sind sie für eine Messung des Wärmewiderstandes bzw. der (Wärme-) Impedanz eines Bauteils/Oberfläche völlig ungeeignet. Diesen (Norm-) $R_{Se}$-/$R_{Si}$-Werten kommt keinerlei physikalische und somit für eine Messung/Berechnung verwertbare Realität zu. Diese sind lediglich dazu geeignet, bei der (monats-/jahres-) gemittelten Simulation der Stärke von (Wärme-) Energieströmen, die durch die gewählten Modellvereinfachungen (z.B. fehlendes "Strahlungsklima" bzw. "Strahlungsumgebung") notwendig auftretenden Fehler ggf. auszugleichen.

Bz1: Berechnung Wärmewiderstände:

Physik versus ENEV 2009:

$$R_W = R_{W1} + R_{W2} \qquad \neq R_{Si} + \Sigma_i(d_i/\lambda_i) + R_{se}$$

$$C_W = \Sigma_i C_i \qquad = \Sigma_i C_i$$

$$I_{Rw} = I_{Se} = I_{Re} + I_{Le} \qquad \neq (T_{Li} - T_{Le})/R_W$$

$$T_{int} = F(T_{Ri}, T_{Li}) \qquad \neq T_{Li}$$

$$T_{ext} = F(T_{Re}, T_{Le}) \qquad \neq T_{Le}$$

Figur 7 zeigt die erfindungsgemäß nun physikalisch korrekte Berechnung einer Impedanz (Wärmewiderstand $R_w = R_{w1} + R_{w2}$ mit der zugehörigen Wärmekapazität $C_w$ bzw. der Trägheit $\tau_w$) eines beliebigen Bauteils bzw. seiner Oberfläche aus den jeweiligen Messwerten $T_{Se}$ bzw. $T_{Si}$. Das hier dargestellte 4-Pol Ersatzschaltbild ist im Gegensatz zur ENEV-Norm aus FIG6 physikalisch korrekt. Da i.d.R. und in allen Simulationsmodellen die Rauminnentemperatur $T_{Se}$ als (nahezu) konstant angenommen werden kann, "sieht" die variable (Außen-) Temperatur $T_{Se}$ mit den beiden (Regel-) Zyklen Tag ($\omega = 2\pi * 24h$) bzw. Jahr ($\omega = 2\pi * 365 * 24h$) nur die Parallelschaltung von $R_{w1}$ und $C_w$ mit der Zeitkonstanten $\tau_w$ als effektive "Trägheit" des jeweiligen Bauteils bzw. seiner Oberfläche. Bleibt die Messperiode $\Delta t$ klein gegen diese Zeitkonstante, so können gemäß 4-Pol-Theorie auch diese sonst "verborgenen" Werte zumindest näherungsweise ermittelt werden. Ein weiter Vorteil dieser erfindungsgemäßen Messmethode ist die Tatsache, dass im DC-Fall ($\omega = 0$) der $R_w$-Wert einer Innenmit dem einer Außen-Messung unter i.d.R. sehr verschiedenen Messbedingungen natürlich übereinstimmen müssen. Eine Fehlerkontrolle wird so zumindest erleichtert, wenn nicht erstmals möglich.

$$\text{Bz1:} \quad Z_{Wj} = \begin{cases} AC(\omega \neq 0): R_{W2} + R_{W1}/(1 + 2\pi j * R_{W1}C_W/t_w) = R_{W2} + R_{W1}/(1 + 2\pi j * \tau_{Wj}/t_w) \\ DC(\omega = 0): R_{W1} + R_{W2} = A_j * \Sigma_i(d_{1i}/l_{1i}) + A_j * \Sigma_k(d_{2k}/l_{2k}) \end{cases}$$

$$\text{mit } \tau_{Wj} = R_{W1}C_W$$

$$\text{Bz2:} \quad I_{Se} = \begin{cases} AC(\omega \neq 0): I_{Re} + I_{Le} = I_{Si} - I_C \neq I_{Si} = I_{Ri} + I_{Li} \\ DC(\omega = 0): I_{Re} + I_{Le} = I_{Si} = I_{Ri} + I_{Li} \end{cases}$$

$$\text{Bz3: } I_C(t_i) = I_{Si}(t_i) - I_{Se}(t_i) \qquad \text{für alle } \omega, t_i$$

$$R_{W1} \approx \Delta U_C / \Delta I_{Si} = ((T_{Se}(t_{i+1}) - T_{Se}(t_i)) - (R_{W2} * (I_{Se}(t_{i+1}) - I_{Se}(t_i))))$$

$$/ (I_{Si}(t_{i+1}) - I_{Si}(t_i))$$

$$R_{W2} = Z_{Wj}(DC) - R_{W1}$$

$$C_W \approx \Delta Q_C / \Delta U_C = \Delta t * (I_C(t_{i+1}) + I_C(t_i))$$

$$/ (2 * ((T_{Se}(t_{i+1}) - T_{Se}(t_i)) - R_{W2} * (I_{Se}(t_{i+1}) - I_{Se}(t_i)))$$

$$\text{Für alle } \Delta t = t_{i+1} - t_i \text{ und } \Delta t << \tau_{Wj}$$

Figur 8 zeigt die erfindungsgemäße und trigonometrisch korrekte Messung/Ermittlung der Bauteilflächengeometrie hier am Beispiel einer geneigten (Dach-) Fläche. Bei der Messung der Oberflächentemperaturen $T_{Se}(i,k)$ mit der Thermokamera TK1 (siehe Figur 9) wird mittels des eingebauten Messgerätes DM1 (siehe Figur 10) gleichzeitig durch mindestens drei (Laser-) Distanzmessungen ($S_1$, $S_2$, $S_3$, ...) mit bekannten und festen Winkeln ($\alpha_{12}$, $\alpha_{13}$, $\alpha_{23}$, ...) die (Mess-/Dach-) Fläche BE1(P1, P2, P3, ...) trigonometrisch vollständig bestimmt und mit realen Dimensionen/Koordinaten (z.B. in m) sowie in ihrer Lage im Raum ($\alpha_{Dach}$ zur Horizontalen bzw. ihrer Neigung zur Kamerabildebene $\alpha_{Kamera}$) definiert. Mit diesen Daten kann nun der "Footprint" $\Delta A$ eines jeden Kamerapixels sowohl in Bild-Koordinaten (i,k) als auch in realen Koordinaten (x,y,z) bestimmt werden. Damit ist sowohl ein Flächenelement $\Delta A(i,k)$ als auch die gesamte Messfläche (z.B. in m$^2$) mit allen Charakteristika darin vollständig erfasst und vermessen. In diesem nun mit realen Dimensionen (x,y,z) versehenen Kamerabild von TK1 können nun während und/oder nach der Messung mittels geeigneter Bildbearbeitungsalgorithmen weitere Strukturen/Objekte für eine (thermische) Messung/Auswertung automatisch identifiziert und ebenfalls vollständig charakterisiert werden!

Figur 9 zeigt die erfindungsgemäße und nun physikalisch korrekte Messung und Berechnung der $I_{Se}$-/$I_{Si}$-Werte am allgemeinen Fall einer geneigten Bauteilfläche (z.B. Dach, ...). Dazu müssen erfindungsgemäß mit der (Thermo-) Kamera TK1 die Oberflächentemperaturen $T_{Se}(i,k)$ aller Flächenelement $\Delta A(i,k)$, die jeweilige $2\pi$-Halbraumstrahlung (mit TK2) auf dieses Flächenelement $\Delta A(i,k)$, die (Luft-) Umgebungsparameter ($T_{Li}$, $v_{Li}$, ...) des jeweils umschlossenen Raumes (hier Wohnhaus) mit den Messgeräten T1 sowie die (Luft-) Umgebungsparameter ($T_{Le}$, $v_{Le}$, ...) der (Außen-) Welt mit den Messgeräten T2 möglichst gleichzeitig gemessen werden. Nimmt man erfindungsgemäß in erster Näherung die mit TK2 gemessene Halbraumstrahlung ($T_{Sky}$, $T_{Erde}$) als vom Ort des Flächenelements $\Delta A(i,k)$ unabhängig an, so lassen sich die Ströme $I_{Se}$/$I_{Si}$ erstmals einfach und in geschlossener Form angeben und mit hinreichender Genauigkeit berechnen. Die Berechnung der sonst extrem schwierig zu erstellenden und zu lösenden Planck'schen Strahlungsintegrale kann somit unterbleiben. Der jeweilige Strahlungsanteil $I_{Re}$/$I_{Ri}$ kann damit einfach berechnet werden. Für den Konvektionsanteil von $I_{Le}$/$I_{Li}$ sind nun ebenfalls alle Informationen ($T_{Luft}$, $v_{Luft}$, $L_{char}$, $\alpha_{Dach}$, ...) vorhanden, so dass dieser mittels bekannter Strömungsmechanik-Formeln ($\Leftrightarrow$VDI-Wärmeatlas) ebenfalls mit hinreichender Genauigkeit ermittelt werden kann. Damit sind $I_{Se}$/$I_{Si}$ vollständig Charakterisiert. Die Energiekennwerte der Oberflächen/Bauteile können nun aus diesen Werten jeweils (siehe z.B. Figur 7) berechnet werden.

Figur 10 zeigt das erfindungsgemäß zusammengestellte integrierte Gesamtsystem bzw. die Anordnung mit dem minimal notwendigen Satz von Messgeräten zur Messung/Bestimmung der/aller benötigten Energie- und Geometriekennwerte ($U_W$/$R_W$, $C_W$/$\tau_W$, Bauteildimensionen, ...) eines Gebäudes und/oder eines Bauteils. Dieser besteht aus einer (Thermo-) Kamera TK1 mit eingebautem Entfernungsmesser DM1 und einem Halbraumstrahlungsmessgerät TK2, das zumindest die beiden Halbräume Himmel und Erde mit einstellbarem $\varphi_{Erde}$ vermessen können muss. Weiter werden mindestens 2 (möglichst) mit Funkübertragung ausgestattete Umgebungsparametermessgeräte T1 bzw. T2 für die Liquid- (hier zumeist Luft-) Innen- und Außen-Temperaturen $T_{Li}$/$T_{Le}$, die Strömungsgeschwindigkeiten $v_{Li}$/$v_{Le}$, die Feuchte, etc. benötigt. Komplettiert wird das Gesamtsystem durch einen Rechnerarbeitsplatz AP1 mit der vollständigen THERMO-U Auswerte-SW sowie ggf. weiterer Tools zur komfortablen Bearbeitung und Auswertung der gewonnenen (Thermo-) Bildinformationen sowie zur Erstellung aussagekräftiger Berichte.

Abschließend wird eine Zusammenfassung über mögliche Ausführungen der Erfindung gegeben

Es witrd ein Verfahren zur Messung und Berechnung von Wärmeenergieverlusten $P_v$, von Wärmewiderständen $R_W$, effektiven Wärmekapazitäten $C_W$ sowie der zugehörigen thermischen Trägheitskonstanten $\tau_W$ von Oberflächen von Geräten, Anlagen, Gebäuden, usw. vorgestellt, mit dem gleichzeitig alle Konvektions- und Strahlungs- (Wärme-) Energieverluste eines Messobjektes durch seine jeweiligen Oberflächen berührungslos sowohl von innen als auch von außen gemessen und berechnet werden können.

Im Falle einer teilweisen Integration/Bedeckung des Messobjektes in/durch ein unbekanntes Wärmeleitungsmedium - hier Boden genannt - können auch die Wärmeleitungsverluste in den Boden durch Differenzbildung einer integralen Innen- und Außen-Messung nach Anspruch 1 bestimmt werden.

Die jeweiligen Oberflächentemperaturen aller Flächenelemente können mittels (Thermo-) Kamera/Sensor (TK1) berührungslos erfasst und ihre jeweilige tatsächliche Lage und Geometrie im Raum durch ein integriertes Geometriemesssystem (DM1) gleichzeitig mit erfasst und berechnet werden.

Weiterhin kann der Strahlungsenergieeintrag der Messobjektumgebung in jedes vermessene Flächenelement durch einen integrierten $2\pi$-Halbraum-Strahlungssensor (TK2) nach mindestens 2 einstellbaren Raumwinkeln ($\varphi_{Sky}$, $\varphi_{Earth}$) getrennt und mit der Messung der Oberflächentemperaturen der jeweiligen Flächenelemente gleichzeitig mit erfasst werden.

Außerdem kann der $2\pi$-Halbraum-Strahlungssensor (TK2) den zu messenden Halbraum in MxK gleiche/ungleiche Raumwinkel aufteilen, getrennt vermessen (Halbraum-Thermokamera) und die jeweiligen Strahlungstemperaturen der einzelnen Raumwinkel raumwinkelanteilskorrekt an das integrierte Messsystem weitergeben.

Zudem kann jeweils mindestens ein gesonderter, mittels Kommunikationseinrichtung in das gesamte Messsystem integrierter Fluidparametersensor die zur Messung der Konvektionsverluste zusätzlich notwendigen Fluidparameter des jeweiligen Innenraumes sowie des jeweiligen Außenraumes) des Messobjektes, wie Temperatur, Strömungsgeschwindigkeit (Betrag, Richtung), Feuchte etc., gleichzeitig an das integrierte Messsystem als Zeitpunkts- und/oder als Zeitperioden- (Mittel-) Wert an das integrierte Messsystem übermittelt werden.

Das kameraintegrierte Geometriemesssystem kann gleichzeitig mit der Temperaturmessung mittels dreier Messstrahlen ($S_1$, $S_2$, $S_3$) mit bekannten Winkeln ($\alpha_{12}$, $\alpha_{13}$, $\alpha_{12}$) zueinander jeweils drei Punkte ($P_1$, $P_2$, $P_3$) auf der jeweiligen Messebene (BE1) in Lage und Abstand zur Bildebene der Kamera vermisst und so durch einfache trigonometrische Berechnung jedem Bildpixel des Messobjektes reale physikalische Dimensionen (z.B. in m) zuordnet und damit dem Gesamtbild der Messkamera ebenfalls reale x/y/z-Koordinaten (z.B. in m) zuordnet.

Das kameraintegrierte Geometriemesssystem kann gleichzeitig mit der Temperaturmessung mehr als drei Messstrahlen ($S_1$, $S_2$, ...) mit bekannten Winkeln zueinander aussendet und so die Zuordnung realer $(x, y, z)$ Koordinaten bzw. anderer Koordinatensysteme (z.B. Zylinderkoordinaten) durch einfache trigonometrische Berechnung auch an gekrümmte Messflächen vermittels wählbarer Oberflächenformschablonen ermöglichen.

Das Verfahren kann sich dadurch auszeichnen, dass alle Teile des integrierten Messsystems via Kommunikationseinrichtungen drahtlos miteinander und mit einem Computerarbeitsplatz (AP1) verbunden sind bzw. damit verbunden werden können und so alle zur Auswertung notwendigen physikalischen und Geometrie-Informationen sowohl in der Messkamera (TK1) als auch am Computerarbeitsplatz zur Auswertung sofort nach der Messung zur Verfügung stehen.

Es werden weiterhin ein Computerprogramm und ein Computerprogrammprodukt vorgestellt, die direkt in den internen Speicher eines Computers geladen werden können und Softwareabschnitte umfassen, mit denen ein Verfahren zur Messung und Berechnung von Wärmeenergieverlusten, von Wärmewiderständen der hierin beschriebenen Art ausgeführt werden kann.

Die vorliegende Erfindung beruht auf der (physikalischen) Tatsache, dass (Wärme-) Energieströme $I_E$ durch ein Bauteil (Medium m1) bzw. dessen Grenz-/Hüllfläche $A_{12}$ (m1 ⎕ m2) zur Umgebung (Medium m2) nur abhängig sind von den folgenden, im Einzelnen messbaren Materialeigenschaften bzw. Umweltbedingungen:

Es gilt hierbei stets: $I_E(A_{12})=I_{Em1}=I_{Em2}= I_{kdt} + I_{knv} + I_{rad}$ mit

$$I_{kdt}= A_{12} * [d_{m2}/\lambda_{m2}] * (T_S(x,y) - T_{m2}(Umgb))$$

mit $T_{m2}(Umgb) = T_{fld}(Umgb)$;

$$I_{knv}= A_{12} * \alpha_k(\gamma_s, \varnothing(T_S), L_{char}(A_{12}), E_{mat}(fld), v_{fld})$$
$$* (T_S(x,y) - T_{fld}(Umgb));$$

$$I_{rad}= \int_{A12} [C_{12}(x,y,2\pi-Hem(x,y)) * (T_S^4(x,y) - T_{R2}^4(2\pi-Hem(x,y)))]$$

mit $T_{R2}(2\pi-Hem(x,y)) \neq T_{fld}(Umgb)$;

Wie zu erkennen ist, wird die Bestimmung/Messung wie die jeweilige (Umgebungs-) Temperaturabhängigkeit der $I_E$-Anteile zunehmend komplex, so dass in praxi bei einer Messung mit Vereinfachungen gearbeitet werden muss. Bei der Bestimmung der thermischen Eigenschaften der Bauteile/Hüllflächen kommt zusätzlich noch deren Trägheit/Speicherfähigkeit erschwerend hinzu, d.h. ihre thermischen Widerstände sind komplex! Sie können daher nur aus einer Zeitreihenmessung, wie hierin beschrieben, ermittelt werden.

Die Standardumgebung bei Gebäuden ist das Fluid Luft. Daher wird der konduktive Anteil $I_{kdt}$ i.A. zu Null, d.h. es sind nur die konvektiven und radiativen (Strahlungs-) Anteile an $I_E$ zu berücksichtigen.

Dies vereinfacht die Messaufgabe ganz erheblich, da der konvektive Anteil $I_{knv}$ nur vom Wärmeübergangsparameter $\alpha_k$ und der leicht messbaren Temperaturdifferenz $T_S(x,y)-T_{fld}(Umgb)$ abhängt. Der Parameter $\alpha_k$ wiederum hängt nur von (Oberflächen-) Geometrie ($\gamma_s \Delta x_{12}$, $\Delta y_{12}$) der (Hüll-) Fläche $A_{12}$, ihrer mittl. Oberflächentemperatur ø($T_S$) sowie von (weitgehend konstanten) Materialparametern sowie der Strömungsgeschwindigkeit des Umgebungsfluides (i.A. Luft) ab.

Ein wesentlicher Gedanke besteht darin, alle diese Parameter gleichzeitig und automatisch zu erfassen und mit einem ebenfalls automatisch und fallspezifisch erstellten Modell die zugehörigen Energieströme (z.B. $I_{knv}$) in Wert und Richtung physikalisch korrekt zu ermitteln. Dies wird so in keinem mir bekannten Verfahren getan.

Was den Strahlungsanteil $I_{rad}$ des Energiestromes betrifft, so sind die Zusammenhänge jedoch sehr viel komplexer. Sie sind sogar i.A. nicht berechenbar, d.h. es gibt nur für besondere Fälle und Geometrieen geschlossene Lösungen, also Formeln zur Berechnung der jeweiligen Werte. Ein weiterer sehr wichtiger Punkt ist, dass hierbei neben den Oberflächentemperaturen $T_s(x,y)$ von $A_{12}$ auch die (Rück-) Strahltemperaturen $T_{R2}(2\pi\text{-Hem}(x,y))$, d.h. die Oberflächentemperaturen von schwarzen Strahlern die eine äquivalente Wärmestrahlung auf $A_{12}$ aussenden, zu berücksichtigen sind. Ohne vereinfachende Modellannahmen sowie eine geeignete Messung/Modellierung ist dieser häufig sogar dominante Anteil $I_{rad}$ am Energiestrom $I_E$ durch $A_{12}$ weder mess- noch berechenbar.

Genau hier setzt wiederum das Verfahren an mit den folgenden, für praktische Zwecke hinreichend genauen Vereinfachungen und Modellierungen:

$A_{12}$ ist ein grauer ($\varepsilon_1$) Strahler, der seine $2\pi$-Umgebung nicht messbar beeinflusst. Seine äquivalente Schwarzkörper-Strahlung $T_s(x,y)$ wird also vollständig absorbiert!

Die relevante $2\pi$-Wärmestrahlung der Umgebung auf $A_{12}$ wird durch die Messung einer äquivalenten Strahlung der jeweiligen schwarzen ($\varepsilon_2=1$!) $2\pi$-Halbkugelumgebung von $A_{12}$ (zumindest hinreichend korrekt) modelliert.

Eine $2\pi$-Hemisphären-Thermokamera (auf der z-Achse) von $A_{12}$ misst genau diese äquivalente schwarze ($\varepsilon_2=1$!) $2\pi$-Hemisphärenstrahlung und damit $T_{R2}(2\pi\text{-Hem}(x,y))$ hinreichend genau.

Mit diesen Annahmen und Modellierungen wird jetzt $I_{rad}$ erstmals mess- und berechenbar. Die i.A nicht lösbare Integralformel für $I_{rad}=\int_{A12}[C_{12}(...)^*(T_S^4(...)- T_{R2}^4(...))]$ kann nun durch geschlossene Formeln ersetzt und $I_{rad}$ berechnet werden.

So wird der Integraltherm $C_{12}(...)$ zu $C_{12}=\varepsilon_1(x,y)^*(\varepsilon_2=1)^*\sigma$ mit der Bolzmannkonstanten $\sigma$. Die Integralformel für den Energiestrom $I_{rad}$ wird so zu $I_{rad}=\int_{A12}[C_{12}^*(Ts^4(x,y)-T_{R2}^4(...))]$ die in einfacher Form über jedes $\Delta A_{12}(x,y)$ berechnet und aufsummiert werden kann. So bleibt erfindungsgemäß lediglich die Aufgabe die für den Fall jeweils relevanten Rückstrahltemperaturen $T_{Rk}^4(...)$ zu messen und in die Formeln/Modelle einzufügen. Dabei kann zwischen nur einer effektiven $2\pi$-Temperatur $T_R^4(2\pi)$, zwischen zwei Temperaturen ($T_{Ra}^4(\phi 1)$, $T_{Rb}^4(\phi 2)$ mit $\phi 1+\phi 2=2\pi$) bis hin zu MxK-Raumwinkeln mit $T_{Rmk}^4(\phi_m,\phi_k)$ ggf. differenziert werden.

Die erfindungsgemäße Automatisierung und die Gleichzeitigkeit der Messung erlaubt als Folge auch über Zeitreihenmessungen sogar die Messung/Bestimmung der Wärmekapazität $C_w$ bzw. der Trägheitskonstante $\tau_w$ von $A_{12}$!

Das erfindungsgemäße Verfahren beruht also auf

einer automatischen Erstellung eines physikalische korrekten Konvektionsmodells ($\Leftrightarrow a_k(...)$) auf der Basis von zu messenden Oberflächentemperaturen $T_s(x,y)$, Geometrieen ($L_{char}$, $\gamma_s$, ...) und Umweltinformationen ($T_{fld}$, $v_{fld}$, ...) zur Berechnung des zugehörigen Energiestromes $I_{knv}$ durch $A_{12}$ in Betrag und Richtung!

einer automatischen Erstellung eines physikalische korrekten Strahlungsmodells ($\Leftrightarrow \varepsilon_k(x,y,z)$, $C_{12}(...)$, $Ts^4(x,y,z)$, $T_{Rmk}^4(\phi_m, \phi_k)$, ...) auf der Basis von zu messenden Oberflächentemperaturen $T_s(x,y,z)$, Rückstrahltemperaturen $T_{Rmk}^4(\phi_m,\phi_k)$ und Geometrieen ($\Leftrightarrow \text{footprint}(x,y,\phi_x,\phi_y)$) zur Berechnung des zugehörigen Energiestromes $I_{rad}$ durch $A_{12}$ in Betrag und Richtung!.

einer gleichzeitigen und automatisierten Messung der folgenden Parameter für die Messfläche $A_{12}$:

Geometrie (Dimension, Lage im Raum, $L_{char}$, $\gamma_s$,...),

Oberflächentemperaturen $T_s(x,y,z)$,

relevante ($\Leftrightarrow$Lage) $2\pi$-Rückstrahlung $T_{Rmk}{}^4(\phi_m, \phi_k)$ und

der Umgebungsparameter $T_{fld}(int)$, $T_{fld}(ext)$, $v_{fld}$,

Aufgrund der i.A. sehr großen Temperaturunterschiede zwischen Himmel und Erde ist es bei der Messung von Gebäuden i.A. angebracht, zumindest diese beiden "Rückstrahltemperaturen" getrennt zu erfassen und im Berechnungsmodell zu berücksichtigen. Bei "komplexeren" Strahlungsumgebungen bietet das erfindungsgemäße Verfahren eine Vielzahl von Möglichkeiten diesen Einfluss auf den Wärmetransport durch geeignete Messungen, z.B. mittels einer MxK-Thermokamera, durch geeignete Messung/Mittelung einfach und physikalisch korrekt zu ermitteln.

**Patentansprüche**

1. Verfahren zum Messen und Berechnen eines Wärmetransports durch eine Hüllfläche mit Flächenelementen $\Delta A(i,k)$, bei dem in einem Messsystem eine Wärmestrahlung und eine Konvektion berücksichtigt werden, wobei zur Ermittlung der Wärmestrahlung eine Oberflächentemperatur der Hüllfläche und eine Rückstrahltemperatur der die Hüllfläche umgebenden Hemisphäre berücksichtigt werden, wobei zur Berücksichtigung der Konvektion Messgeräte (T1, T2) für Lufttemperatur, Luftfeuchte und Luftgeschwindigkeit verwendet werden, zur Ermittlung der Oberflächentemperatur eine Wärmebildkamera (TK1) verwendet wird, um die jeweiligen Oberflächentemperaturen der Flächenelemente $\Delta A(i,k)$ zu berücksichtigen, und zur Berücksichtigung der Rückstrahltemperatur die relevante $2\pi$-Wärmestrahlung der Umgebung durch die Messung einer äquivalenten Strahlung der jeweiligen schwarzen $2\pi$-Halbkugelumgebung modelliert wird, wobei zur Ermittlung der Rückstrahltemperatur ein $2\pi$-Halbraum-Strahlungssensor (TK2) mit MxK Pixeln verwendet wird, und zum, Erfassen des Strahlungsenergieeintrags der Messobjektumgebung in jedem vermessenen Flächenelement $\Delta A(i,k)$ der $2\pi$-Halbraum-Strahlungssensor den $2\pi$-Halbraum in MxK gleiche oder ungleiche Raumwinkel aufteilt, getrennt vermisst und die jeweiligen Strahlungstemperaturen der einzelnen Raumwinkel raumwinkelanteilskorrekt an das Messsystem weitergibt.

2. Verfahren nach Anspruch 1, bei dem bei der Berechnung der Konvektion Geometriebedingungen der Hüllfläche berücksichtigt werden.

3. Verfahren nach Anspruch 1 oder 2, bei dem ein konduktiver Wärmeübergang zu einer Bodenfläche berücksichtigt wird.

4. Verfahren nach einem der Ansprüche 1 bis 3, das für ein Gebäude durchgeführt wird.

5. Verfahren nach einem der Ansprüche 1 bis 4, **dadurch gekennzeichnet, dass** im Falle einer teilweisen Integration/Bedeckung des Messobjektes in/durch ein unbekanntes Wärmeleitungsmedium - hier Boden genannt - auch die Wärmeleitungsverluste in den Boden durch Differenzbildung einer integralen Innen- und Außen-Messung bestimmt werden.

6. Verfahren nach einem der Ansprüche 1 bis 5, bei dem die jeweiligen Oberflächentemperaturen aller Flächenelemente mittels Kamera bzw. Sensor berührungslos erfasst und ihre jeweilige tatsächliche Lage und Geometrie im Raum durch ein integriertes Geometriemesssystem gleichzeitig mit erfasst und berechnet werden.

7. Verfahren nach Anspruch 1, bei dem die Aufgaben des $2\pi$-Halbraum-Strahlungssensors durch einen Sensor nach Anspruch 8 mit zusätzlicher Panoramafunktion zur automatischen Erfassung der vollständigen $2\pi$-Hemisphäre der Messfläche, bspw. durch einen $2\pi$-Kameraschwenk, erfüllt werden.

8. Verfahren nach einem der Ansprüche 1 bis 7, bei dem zur Ermittlung der Rückstrahltemperatur eine Wärmebildkamera verwendet wird.

9. Verfahren nach einem der Ansprüche 1 bis 8, bei dem das kameraintegrierte Geometriemesssystem gleichzeitig mit der Temperaturmessung mittels 3er oder mehr Messstrahlen ($S_1$, $S_2$, $S_3$, ..) mit bekannten Winkeln ($\alpha_{12}$, $\alpha_{13}$, $\alpha_{12}$, ...) zueinander jeweils 3 oder mehr Punkte ($P_1$, $P_2$, $P_3$, ...) auf der jeweiligen Messebene in Lage und Abstand zur Bildebene der Kamera vermisst und so durch einfache trigonometrische Berechnung jedem Bildpixel des Messobjektes reale physikalische Dimensionen (z.B. in m) zuordnet und damit dem Gesamtbild der Wärme- bzw. Messkamera ebenfalls reale x/y/z-Koordinaten zuordnet.

10. Anordnung zum Berechnen eines Wärmetransports durch eine Hüllfläche zur Durchführung eines Verfahrens nach einem der Ansprüche 1 bis 9, mit einer Recheneinheit, die dazu ausgelegt ist, eine Wärmestrahlung und eine Konvektion zu berücksichtigen, wobei zur Ermittlung der Wärmestrahlung eine Oberflächentemperatur des Messobjekts und eine Rückstrahltemperatur der jeweils umgebenden $2\pi$-Hemisphäre des Messobjekts berücksichtigt werden, wobei die Anordnung umfasst:

- Messgeräte (T1, T2) für Lufttemperatur, Luftfeuchte und Luftgeschwindigkeit zur Berücksichtigung der Konvektion,
- eine Wärmebildkamera (TK1) mit MxK Pixeln zur Ermittlung der jeweiligen Oberflächentemperaturen der Flächenelemente $\Delta A(i,k)$ des Messobjekts und
- einen $2\pi$-Halbraum-Strahlungssensor (TK2) mit MxK Pixeln zur Ermittlung der Rückstrahltemperatur, und wobei die Recheneinheit so programmiert ist, dass die Anordnung ein Verfahren nach Anspruch 1 ausführt.

11. Computerprogramm-Produkt, das direkt in den internen Speicher einer Recheneinheit einer Anordnung nach Anspruch 10 geladen werden kann und Softwareabschnitte umfasst, mit denen die Anordnung so gesteuert wird, dass sie ein Verfahren nach einem der Ansprüche 1 bis 9 durchführt.

**Claims**

1. A method for measuring and calculating a heat transfer through an enveloping surface with surface elements $\Delta A(i,k)$, in which a heat radiation and a convection are taken into account in a measuring system,
wherein to determine the thermal radiation, a surface temperature of the enveloping surface and a back-radiation temperature of the hemisphere surrounding the enveloping surface are taken into account,
wherein
to take the convection into account, measuring devices (T1, T2) for air temperature, humidity and air speed are used, to determine the surface temperature, a thermal imaging camera (TK1) is used to take into account the respective surface temperatures of the surface elements $\Delta A$ (i, k),
and to take into account the back-radiation temperature, the relevant $2\pi$ thermal radiation of the environment is modeled by measuring an equivalent radiation of the respective black $2\pi$ hemispherical environment, wherein to determine the back-radiation temperature, a $2\pi$ half-space radiation sensor (TK2) with MxK pixels is used,
and to detect the radiant energy input into the measured object environment in each measured surface element $\Delta A(i, k)$, the $2\pi$ half-space radiation sensor divides the $2\pi$ half-space into MxK equal or non-equal spatial angles, measures them separately and communicates to the measuring system the respective radiation temperatures of the individual spatial angles according to the spatial angle proportions.

2. The method according to claim 1, in which geometrical conditions of the enveloping surface are taken into account in calculating the convection.

3. The method according to claim 1 or 2, in which a conductive heat transmission to a floor surface is taken into account.

4. The method according to any one of claims 1 to 3, that is executed for a building.

5. The method according to any one of claims 1 to 4, **characterized in that** in the event of a partial integration/covering of the measurement object in/by an unknown thermal conductive medium - here called a floor - also the heat conduction losses in the floor are determined by taking the difference between an integral interior measurement and exterior measurement.

6. The method according to any one of claims 1 to 5, in which the respective surface temperatures of all surface elements are detected in a non-contact manner by means of a camera and/or sensor and their respective actual position and geometry in the space are also simultaneously detected and calculated by means of an integrated geometry measurement system.

7. The method according to claim 1, in which the tasks of the $2\pi$ half-space radiation sensor are performed by a sensor according to claim 8 with an additional panorama function for automatic detection of the complete $2\pi$ hemisphere of the measurement surface, e.g. by means of a $2\pi$ pan shot.

**8.** The method according to any one of claims 1 to 7, in which a thermal imaging camera is used to determine the back-radiation temperature.

**9.** The method according to any one of claims 1 to 8, in which the camera-integrated geometry measurement system, simultaneously with the temperature measurement by means of 3 or more measurement beams (S1, S2, S3, ..) with known angles ($\alpha$12, $\alpha$13, $\alpha$12, ...) relative to one another, measures respectively 3 or more points (P1, P2, P3, ...) on the respective measurement plane in terms of position relative to and distance from the imaging plane of the camera and in this way, by means of simple trigonometric calculation, assigns each image pixel of the measured object real physical dimensions (e.g. in m) and thereby assigns the entire image from the thermal and/or measurement camera real x/y/z coordinates.

**10.** An arrangement for calculating a heat transfer through an enveloping surface by executing a method according to any one of claims 1 to 9, using a processor that is configured to take into account a thermal radiation and a convection, whereby to calculate the thermal radiation, a surface temperature of the measured object and a back-radiation temperature of the respective surrounding $2\pi$ hemisphere of the measured object are taken into account, whereby the arrangement comprises:

- measuring devices (T1, T2) for air temperature, humidity and air speed to take the convection into account,
- a thermal imaging camera (TK1) with MxK pixels to determine the respective surface temperatures of the surface elements $\Delta$A (i, k) of the measured object, and
- a $2\pi$ half-space radiation sensor (TK2) with MxK pixels to determine the back-radiation temperature, and wherein the processor is programmed such that the arrangement executes a method according to claim 1.

**11.** A computer program product that can be loaded directly into the internal memory of a processor of an arrangement according to claim 10 and comprises software sections with which the arrangement is controlled such that it executes a method according to any one of claims 1 to 9.

## Revendications

**1.** Procédé de mesure et de calcul d'un transfert de chaleur à travers une surface enveloppante comportant des éléments de surface $\Delta$A(i,k),
pour lequel un rayonnement thermique et une convection sont pris en considération dans un système de mesure, sachant que pour déterminer le rayonnement thermique, il est tenu compte d'une température de surface de la surface enveloppante et d'une température de rétroréflexion de l'hémisphère enveloppant la surface enveloppante, et que des appareils de mesure (T1, T2) destinés à mesurer la température ambiante, l'humidité de l'air et la vitesse de l'air sont utilisés pour la prise en compte de la convection,
une caméra thermique (TK1) est utilisée pour déterminer la température de surface, afin de tenir compte des températures de surface correspondantes des éléments de surface $\Delta$A (i, k),
et, pour la prise en compte de la température de rétroréflexion, le rayonnement thermique $2\pi$ pertinent est modélisé par la mesure d'un rayonnement équivalent de l'environnement correspondant $2\pi$ de l'hémisphère noir, sachant que pour déterminer la température de rétroréflexion, un capteur de rayonnement de demi-espace $2\pi$ (TK2) aux pixels MxK est utilisé,
et pour enregistrer l'entrée de l'énergie du rayonnement de l'environnement de l'objet de mesure dans chaque élément de surface mesuré $\Delta$A(i, k), le capteur de rayonnement de demi-espace $2\pi$ segmente le demi-espace $2\pi$ en angles solides MxK égaux ou inégaux, le mesure séparément et transmet les températures de rayonnement correspondantes des angles solides individuels en fonction de la proportion de l'angle solide au système de mesure.

**2.** Procédé selon la revendication 1, pour lequel il est tenu compte des conditions géométriques de la surface environnante lors du calcul de la convection.

**3.** Procédé selon la revendication 1 ou 2, pour lequel une transmission de chaleur de convection vers une surface au sol est prise en compte.

**4.** Procédé selon l'une des revendications 1 à 3, réalisé pour un bâtiment.

**5.** Procédé selon l'une des revendications 1 à 4, **caractérisé en ce que**, en cas d'intégration/couverture partielle de l'objet de mesure dans/par un support de conduction thermique - appelé ici « sol » - des pertes de conduction thermique dans le sol sont également déterminées par la différence entre une mesure intérieure et extérieure intégrale.

6. Procédé selon l'une des revendications 1 à 5, pour lequel les températures de surface correspondantes de tous les éléments de surface sont enregistrées sans contact au moyen d'une caméra ou d'un capteur et leur position et géométrie réelles respectives dans l'espace sont également enregistrées et calculées simultanément par un système de géométrie intégré.

7. Procédé selon la revendication 1, pour lequel les tâches du capteur de rayonnement de demi-espace $2\pi$ sont accomplies par un capteur selon la revendication 8 doté d'une fonction panoramique supplémentaire pour l'enregistrement automatique de l'hémisphère $2\pi$ complet de la surface de mesure ou par une caméra des plans panoramiques $2\pi$.

8. Procédé selon l'une des revendications 1 à 7, pour lequel une caméra thermique est utilisée pour déterminer la température de rétroréflexion.

9. Procédé selon l'une des revendications 1 à 8, pour lequel le système de mesure géométrique intégré à la caméra mesure, simultanément avec la température au moyen de trois faisceaux de mesure ou plus (S1, S2, S3, ..) aux angles connus ($\alpha12$, $\alpha13$, $\alpha12$, ...) les uns par rapport aux autres, à chaque fois 3 points ou plus (P1, P2, P3, ...) sur le plan de mesure correspondant dans la position et à distance par rapport au plan focal de la caméra et attribue ainsi des dimensions physiques réelles (par exemple, en m) à chaque pixel d'image de l'objet de mesure par un simple calcul trigonométrique et attribue ainsi à l'image globale de la caméra thermique ou de mesure également des coordonnées réelles x/y/z.

10. Dispositif de calcul d'un transfert de chaleur à travers une surface enveloppante pour réaliser un procédé selon l'une des revendications 1 à 9, ledit dispositif étant doté d'une unité de calcul adaptée pour prendre en considération un rayonnement thermique et une convection, sachant qu'il est tenu compte d'une température de surface de l'objet de mesure et d'une température de rétroréflexion de l'hémisphère $2\pi$ enveloppant de l'objet de mesure pour déterminer le rayonnement thermique, le dispositif comprenant :

- des appareils de mesure (T1, T2) destinés à mesurer la température ambiante, l'humidité de l'air et la vitesse de l'air pour la prise en compte de la convection,
- une caméra thermique (TK1) aux pixels MxK pour déterminer les températures de surface correspondantes des éléments de surface $\Delta A$ (i, k) de l'objet de mesure et
- un capteur de rayonnement de demi-espace $2\pi$ (TK2) aux pixels MxK pour déterminer la température de rétroréflexion, et
sachant que l'unité de calcul est programmée de telle manière que le dispositif réalise un procédé selon la revendication 1.

11. Produit de programme informatique pouvant être chargé directement dans la mémoire interne d'une unité de calcul d'un dispositif selon la revendication 10 et comprenant des parties logicielles destinées à commander le dispositif de telle manière qu'il réalise un procédé selon l'une des revendications 1 à 9.1.

**Figur 1:**

Typische Energieverluste eines Wohnhauses

**Figur 2:**

Physikalische Ursachen der Energieverluste von Gebäuden

**Figur3**: Energieverluste von Gebäuden und Wärmestrommodell

**Figur 4:**

Messphysik - Wärmestrom- und Finite-Elemente Modell

**Figur 5**:

Messphysik - Äquivalenz Wärmestrom- und Wärmebild-Modell

**Figur 6:**

Messphysik – Differenzen Physik ⟺ Standards ENEV2009/2012

**Figur 7:**

Messphysik – Berechnung Energiekennwerte ($R_W$, $C_W$, $\tau_W$, ...)

**Figur 8:**

Messphysik - Berechnung Bauteil-Dimensionen/Geometrie

**Figur 9:**

Messphysik - Berechnung Energieströme ($I_{Se}$, $I_{Re}$, $I_{Le}$, ...)

**Figur 10:**

THERMO-U – Gesamtsystem zur Messung von Energieverlusten

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2000206268 B

**In der Beschreibung aufgeführte Nicht-Patentliteratur**

- **REVEL G. M. et al.** Development and Experimental Evaluation of a Thermography Measurement System for Real-time Monitoring of Comfort and heat rate Exchange in the Built Environment. *Measurement Science & Technology,* vol. 23 (3), 1-12